# EUROPEAN PATENT APPLICATION

(11) **EP 3 279 087 A1**
(43) Date of publication of application: **07.02.2018**
(21) Application number: 17182959.1
(22) Date of filing: 25.07.2017
(51) Int. Cl.: B64C 27/08, B64C 27/12, B64C 27/59, B64D 35/04

(54) **MULTI-SHAFT POWER SOURCE UNMANNED FLIGHT EQUIPMENT**

(30) Priority: 28.07.2016 CN 201610605002
(71) Applicant: Ewatt Technology Co., Ltd., Wuhan Hubei 430000 (CN)
(72) Inventor: ZHAO, Guocheng, Wuhan, Hubei 430000 (CN); LUO, Wei, Wuhan, Hubei 430000 (CN); QI, Pengcheng, Wuhan, Hubei 430000 (CN)
(74) Representative: Roman, Alexis

(57) **Abstract**

The present invention discloses a multi-shaft power source unmanned flight equipment, and belongs to the technical field of unmanned aerial vehicles. The multi-shaft power source unmanned flight equipment comprises a frame (1), a plurality of rotor sets (2) and a power device (3). The plurality of rotor sets (2) are rotatably fixed on the frame (1), and the power device (3) is correspondingly movably connected with each rotor set (2) respectively. Power is provided for flight of the unmanned flight equipment by the power device (3) with oil drive characteristics, mechanical kinetic energy is generated by burning a combustion material pre-injected in the power device (3), and rotors (21) in each rotor set (2) correspondingly connected with the power device are driven to rotate, thereby replacing the traditional electric multi-rotor unmanned aerial vehicle structure adopting electric modes such as batteries, electronic speed controllers and the like to supply power and provide power for the rotation of the rotors (21); and the unmanned flight equipment has the characteristics of long duration and strong loading capacity.

## Description

### TECHNICAL FIELD

The present invention belongs to the technical field of unmanned aerial vehicles, and particularly relates to multi-shaft power source unmanned flight equipment.

### BACKGROUND OF THE INVENTION

Unmanned aerial vehicles (UAVs) are unmanned airplanes mainly remotely controlled by radio or controlled by their own programs.

The UAVs in the prior art are mostly electric ones and mainly adopt batteries, electronic speed controllers, motors, flight controllers, propellers and the like as main devices, and the flight of the UAVs is controlled by changing the rotating speeds of the propellers. However, the duration of the electric UAVs is very short due to the limitation of battery energy density, so the UAVs have the defect of poor endurance; and the method of prolonging the duration by simply increasing the quantity of batteries also greatly reduces the loading capacity of the UAVs.

### SUMMARY OF THE INVENTION

The present invention provides multi-shaft power source unmanned flight equipment, which is provided with a power device, burns a combustion material injected in the power device to generate mechanical kinetic energy, and then provides power for the rotation of rotors, thereby replacing the traditional electric flight mode of supplying power by batteries or prolonging the duration by increasing the quantity of batteries, and at least having the technical characteristics of long duration and strong loading capacity.

The present invention provides multi-shaft power source unmanned flight equipment, including a frame, a plurality of rotor sets and a power device, wherein each rotor set includes a plurality of rotors, and each rotor set is rotatably fixed on the frame, so that the rotors in each rotor set can rotate relative to the frame; the power device is fixed on the frame, and correspondingly movably connected with each rotor set respectively, so that mechanical transmission can be realized between the power device and each rotor set; and the rotors in each rotor set correspondingly connected with the power device are driven to rotate via mechanical kinetic energy generated by burning a combustion material injected in the power device.

Optionally, the multi-shaft power source unmanned flight equipment further includes a belt transmission device, which is fixed on the frame and correspondingly movably connects the power device with each rotor swing set, thereby realizing mechanical transmission between the power device and each rotor set via the belt transmission device.

Optionally, the quantity of the rotor sets is m, and the m is an even number more than or equal to 2; and the m rotor sets include m/2 first rotor sets and m/2 second rotor sets, the m/2 first rotor sets are respectively movably connected with the power device, the m/2 second rotor sets are respectively movably connected with the power device, and the mechanical transmission between the m/2 first rotor sets and the power device is independent from that between the m/2 second rotor sets and the power device. Optionally, the power device includes a first power source, a second power source and a starter, wherein the first power source is provided with a first shaft, and the m/2 first rotor sets are respectively movably connected with the first shaft; the second power source is provided with a second shaft, and the m/2 second rotor sets are respectively movably connected with the second shaft; the starter is movably connected with the first shaft and the second shaft respectively, and is used to start the first shaft and the second shaft to rotate; the started rotating first shaft compresses the combustion material injected in the first power source to generate mechanical kinetic energy, the mechanical kinetic energy drives the first shaft to rotate continuously, and then the first shaft drives each rotor in the m/2 first rotor sets to rotate; and the started rotating second shaft compresses the combustion material injected in the second power source to generate mechanical kinetic energy, the mechanical kinetic energy drives the second shaft to rotate continuously, and then the second shaft drives each rotor in the m/2 second rotor sets to rotate

Optionally, the first power source further includes a first shaft gear; the second power source further includes a second shaft gear; the power device further includes a starter gear; the first shaft gear is sleeved on the first shaft and rotates synchronously with the first shaft, and the second shaft gear is sleeved on the second shaft and rotates synchronously with the second shaft; and the starter gear is connected with the starter, the starter drives the starter gear to rotate, and the starter gear is correspondingly engaged with the first shaft gear and the second shaft gear respectively.

Optionally, the first shaft and the second shaft are parallel, and have opposite rotating directions.

Optionally, the multi-shaft power source unmanned flight equipment further includes a first belt transmission device and a second belt transmission device, wherein the first belt transmission device is fixed on the frame and correspondingly movably connected with the m/2 first rotor sets respectively; the second belt transmission device is fixed on the frame and correspondingly movably connected with the m/2 second rotor sets respectively; the first belt transmission device is sleeved on the first shaft, and the rotation of the first shaft drives the first belt transmission device to carry out transmission so as to drive each rotor in the m/2 first rotor sets to rotate; and the second belt transmission device is sleeved on the second shaft, and the rotation of the second shaft drives the second belt transmission device to carry out transmission so as to drive each rotor in the m/2 second rotor sets to rotate.

Optionally, the first belt transmission device includes a first transmission shaft, m/2 second transmission shafts, a first conveying belt, a first motor and a second motor, wherein the first transmission shaft includes a first fixed end and a first bevel gear end, and the first bevel gear end is of a bevel gear structure; each second transmission shaft includes a third bevel gear end and a fourth bevel gear end, and both the third bevel gear end and the fourth bevel gear end are of a bevel gear structure; the first conveying belt includes a first sleeved end and a second sleeved end; the first motor is fixed on the first shaft and rotates synchronously with the first shaft, and the first conveying belt is sleeved on the first motor via the first sleeved end; the second motor is fixed at the first fixed end and rotates synchronously with the first transmission shaft, and the first conveying belt is sleeved on the second motor via the second sleeved end; the m/2 first rotor sets correspond to the m/2 second transmission shafts one by one, and are correspondingly engaged with the m/2 fourth bevel gear ends of the m/2 second transmission shafts via the bevel gear structures respectively; and the m/2 second transmission shafts are distributed symmetrically by taking the first transmission shaft as a central vertical shaft, the m/2 third bevel gear ends of the m/2 second transmission shafts are engaged with the first bevel gear end to convert the vertical rotation of the first transmission shaft to the transverse rotation of the second transmission shafts, and then each rotor in the m/2 first rotor sets is driven to rotate by the transverse rotation of the second transmission shafts; and/or
the second belt transmission device includes a third transmission shaft, m/2 fourth transmission shafts, a second conveying belt, a third motor and a fourth motor, wherein the third transmission shaft includes a second fixed end and a fifth bevel gear end, and the fifth bevel gear end is of a bevel gear structure; each fourth transmission shaft includes a sixth bevel gear end and a seventh bevel gear end, and both the sixth bevel gear end and the seventh bevel gear end are of a bevel gear structure; the second conveying belt includes a third sleeved end and a fourth sleeved end; the third motor is fixed on the second shaft and rotates synchronously with the second shaft, and the second conveying belt is sleeved on the third motor via the third sleeved end; the fourth motor is fixed at the second fixed end and rotates synchronously with the third transmission shaft, and the second conveying belt is sleeved on the fourth motor via the fourth sleeved end; the m/2 second rotor sets correspond to the m/2 fourth transmission shafts one by one, and are correspondingly engaged with the m/2 seventh bevel gear ends of the m/2 fourth transmission shafts via the bevel gear structures respectively, the m/2 fourth transmission shafts are distributed symmetrically by taking the third transmission shaft as a central vertical shaft, the m/2 sixth bevel gear ends of the m/2 fourth transmission shafts are engaged with the fifth bevel gear end to convert the vertical rotation of the third transmission shaft to the transverse rotation of the fourth transmission shafts, and then each rotor in the m/2 second rotor sets is driven to rotate by the transverse rotation of the fourth transmission shafts.

Optionally, the quantity of rotors in each rotor set is n, and the n is an integer more than or equal to 2.

Optionally, the m is 4.

### Advantages:

In the multi-shaft power source unmanned flight equipment provided by the present invention, power is provided for flight of the unmanned flight equipment by the power device with oil drive characteristics, i.e., the power device is fixed on the frame of the unmanned flight equipment, the power device is correspondingly movably connected with each rotor set respectively, so that mechanical transmission can be realized between the power device and each rotor set, and mechanical kinetic energy is generated by burning a combustion material (e.g., a gas combustion material, a liquid combustion material, a gas-liquid mixed combustion material, etc.) pre-injected in the power device to drive the rotors in each rotor set correspondingly connected with the power device to rotate. The unmanned flight equipment replaces the traditional electric unmanned aerial vehicle adopting electric modes such as batteries, electronic speed controllers and the like to supply power and provide power for the rotation of the rotors, and the unmanned flight equipment does not need to prolong the duration by increasing the quantity of batteries along with the reduction of the loading capacity of the unmanned aerial vehicle, and has the characteristics of long duration and strong loading capacity.

### BRIEF DESCRIPTION OF THE FIGURES

To illustrate the technical solutions in the embodiments of the present invention or in the prior art more clearly, a brief introduction on the accompanying drawings which are needed in the embodiments is given below. Apparently, the accompanying drawings in the description below are merely some of the embodiments of the present invention, based on which other drawings may be obtained by those of ordinary skill in the art without any creative effort.
Fig. 1 is a schematic diagram 1 of an overall structure of multi-shaft power source unmanned flight equipment provided by an embodiment of the present invention;
Fig. 2 is a schematic diagram 2 of the overall structure of the multi-shaft power source unmanned flight equipment provided by the embodiment of the present invention;
Fig. 3 is a schematic diagram 3 of the overall structure of the multi-shaft power source unmanned flight equipment provided by the embodiment of the present invention;
Fig. 4 is a schematic diagram of an overall structure of a power device provided by an embodiment of the present invention;
Fig. 5 is a front view of the overall structure of the power device provided by the embodiment of the present invention;
Fig. 6 is a front view of the exploded structure of the power device provided by the embodiment of the present invention;
Fig. 7 is a front view of a partial structure of a first belt transmission device provided by an embodiment of the present invention;
Fig. 8 is a sectional view of the partial structure of the first belt transmission device provided by the embodiment of the present invention;
Fig. 9 is a front view of a partial structure of a second belt transmission device provided by an embodiment of the present invention;
Fig. 10 is a sectional view of the partial structure of the second belt transmission device provided by the embodiment of the present invention;
Fig. 11 is a front view of an overall structure of a variable pitch device provided by an embodiment of the present invention; and
Fig. 12 is a schematic diagram of the overall structure of the variable pitch device provided by the embodiment of the present invention.

### DETAILED DESCRIPTION OF THE PREFERRED EMBODIMENT

The present invention provides multi-shaft power source unmanned flight equipment, wherein power is provided for flight of the unmanned flight equipment by a power device with oil drive characteristics, i.e., the power device is fixed on a frame of the unmanned flight equipment, the power device is correspondingly movably connected with each rotor set respectively, so that mechanical transmission can be realized between the power device and each rotor set, and mechanical kinetic energy is generated by burning a combustion material (e.g., a gas combustion material, a liquid combustion material, a gas-liquid mixed combustion material, etc.) pre-injected in the power device to drive rotors in each rotor set correspondingly connected with the power device to rotate. The unmanned flight equipment replaces the traditional electric unmanned aerial vehicle adopting electric modes such as batteries, electronic speed controllers and the like to supply power and provide power for the rotation of the rotors, and the unmanned flight equipment does not need to prolong the duration by increasing the quantity of batteries along with the reduction of the loading capacity of the unmanned aerial vehicle, and has the characteristics of long duration and strong loading capacity.

A clear and complete description of the technical solutions in the embodiments of the present invention will be described below, in combination with the accompanying drawings in the embodiments of the present invention, to support the technical problems to be solved by the present invention. Apparently, the embodiments described are merely a part, but not all, of the embodiments of the present invention. All of other embodiments, obtained by those of ordinary skill in the art based on the embodiments of the present invention, fall into the protection scope of the present invention. The keyword "and/or" involved in the embodiments expresses situations of "and" and "or", in other words, A and/or B mentioned in the embodiments of the present invention expresses situations of A and B and A or B, and describes three states between A and B, e.g., A and/or B expresses: only including A but not including B, only including B but not including A, and including A and B.

Meanwhile, in the embodiments of the present invention, when one component is referred to be "fixed" on another component, it can be directly fixed on the other component or there can be an intermediate component. When one component is referred to be "connected" to another component, it can be directly connected to the other component or there may be an intermediate component. When one component is referred to be "arranged" on another component, it can be directly arranged on the other component or there may be an intermediate component. The terms "vertical", "horizontal", "left", "right" and similar expressions used in the embodiments of the present invention are just for the purpose of description, rather than limiting the present invention.

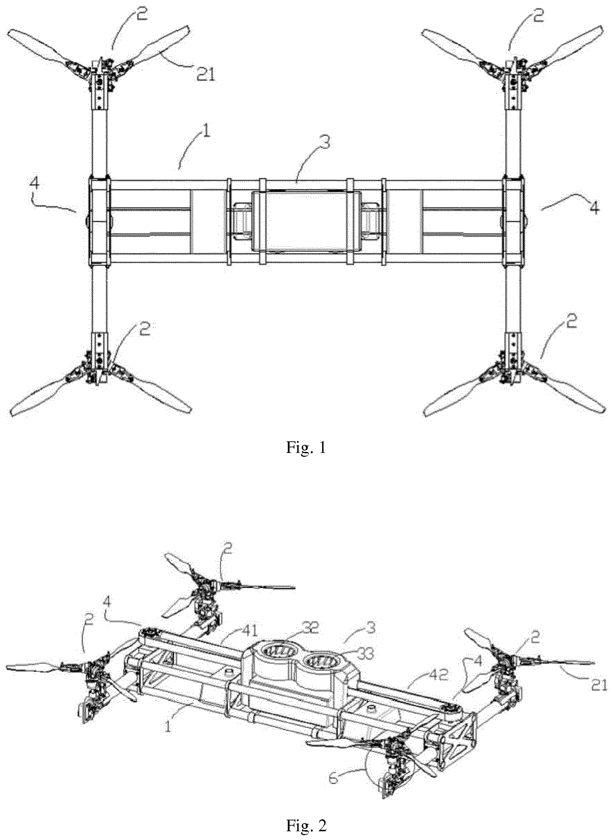

Referring to Figs. 1-2, an embodiment of the present invention provides multi-shaft power source unmanned flight equipment, at least including a frame 1, a plurality of rotor sets 2 and a power device 3. Each rotor set 2 includes a plurality of rotors 21, and each rotor set 2 is rotatably fixed on the frame 1, so that the rotors 21 in each rotor set 2 can rotate relative to the frame 1; and the power device 3 is fixed on the frame 1, and correspondingly movably connected with the each rotor set 2 respectively, so that mechanical transmission can be realized between the power device 3 and each rotor set 2. Mechanical kinetic energy is generated by burning a combustion material pre-injected in the power device 3 to drive the rotors 21 in each rotor set 2 correspondingly connected with the power device 3 to rotate.

Specifically, the frame 1 in the embodiment of the present invention is a supporting platform for the overall structure of the unmanned flight equipment, and is used for supporting the plurality of rotor sets 2, the power device 3 and the like fixedly mounted on the unmanned flight equipment. Each of the plurality of rotor sets 2 is rotatably fixed on the frame 1, wherein how each rotor set 2 is rotatably fixed on the frame 1 is not limited by the embodiment of the present invention, the rotor set 2 can be directly fixed on the frame 1, so that the rotor set 2 can rotate relative to the frame 1, certainly, the rotor set 2 can be movably fixed on the frame 1 via a separate movable device, so that the rotor set 2 can rotate relative to the frame 1, and all situations finally enabling the rotors 21 in each rotor set 2 to rotate relative to the frame 1 are applicable to the present invention.

There may be multiple rotor sets 2 in the embodiment of the present invention, and it could be understood that since each rotor set 2 includes a plurality of rotors 21, the more the rotor sets 2 are, the more the rotors 21 are. The quantity of the rotor sets 2 in the embodiment of the present invention may be m, and the m is an even number more than or equal to 2. The quantity m of the rotor sets 2 is limited to an even number more than or equal to 2 mainly based on the overall structural layout of the unmanned flight equipment provided by the embodiment of the present invention, thereby improving the stability of the equipment in the flight process. For example, the m rotor sets 2 may be equally divided into first sets and second sets, i.e., include m/2 first rotor sets and m/2 second rotor sets, the m/2 first rotor sets are respectively movably connected with the power device 3, the m/2 second rotor sets are respectively movably connected with the power device 3, and the mechanical transmission between the m/2 first rotor sets and the power device is independent from that between the m/2 second rotor sets and the power device. The m/2 first rotor sets and the m/2 second rotor sets are symmetrically distributed on two sides of the power device 3 serving as a central symmetric point.

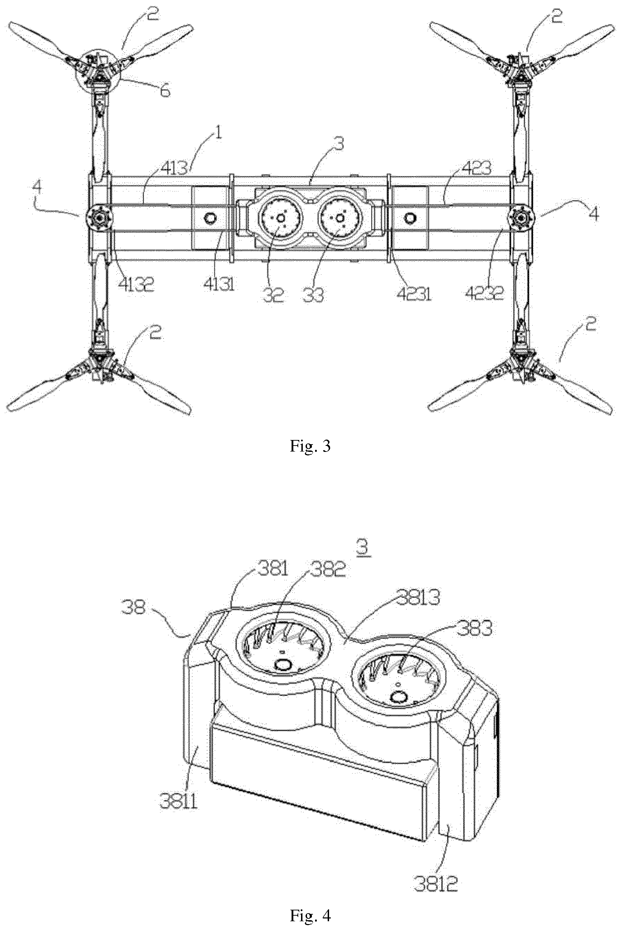

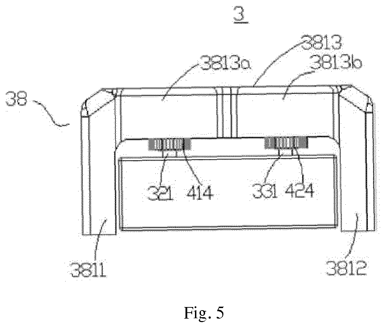

In combination with Fig. 2 and referring to Figs. 3-6, the power device 3 at least includes a first power source 32, a second power source 33 and a starter 34. The first power source 32 is provided with a first shaft 321, and the m/2 first rotor sets are respectively movably connected with the first shaft 321. The second power source 33 is provided with a second shaft 331, and the m/2 second rotor sets are respectively movably connected with the second shaft 331. The starter 34 is movably connected with the first shaft 321 and the second shaft 331 respectively, and is used to start the first shaft 321 and the second shaft 331 to rotate. It should be noted that the first shaft 321 of the first power source 32 is used for driving the m/2 first rotor sets to rotate, and the second shaft 331 of the second power source 33 is used for driving the m/2 second rotor sets to rotate.

Specifically, the starter 34 serving as a starting component starts the first shaft 321 and the second shaft 331 to rotate firstly, the started rotating first shaft 321 compresses the combustion material injected in the first power source 32, the combustion material is exploded and burnt, the thermal energy is converted into mechanical kinetic energy, the first shaft 321 is driven to rotate continuously under the impact of rapidly expanding air pressure, and then the first shaft 321 drives each rotor in the m/2 first rotor sets to rotate, thereby entering a normal cyclic driving program of the first power source 32, the first shaft 321 and the m/2 first rotor sets. The started rotating second shaft 331 compresses the combustion material injected in the second power source 33, the combustion material is exploded and burnt, the thermal energy is converted into mechanical kinetic energy, the second shaft 331 is driven to rotate continuously under the impact of rapidly expanding air pressure, and then the second shaft 331 drives each rotor in the m/2 second rotor sets to rotate, thereby entering a normal cyclic driving program of the second power source 33, the second shaft 331 and the m/2 second rotor sets. It should be noted that after the starter 34 serving as a starting component in the embodiment of the present invention starts the first shaft 321 and the second shaft 331 to rotate, the starter 34 is automatically separated from the first shaft 321 and the second shaft 331 and stops working, and the energy inside the first power source 32 and the second power source 33 themselves is converted into thermal energy and mechanical energy to provide power for the rotation of the first shaft 321 and the second shaft 331.

How the starter 34 starts the first shaft 321 and the second shaft 331 to rotate is not limited by the embodiment of the present invention, a mechanical transmission relation may be directly established between the starter 34 and the first shaft 321 and between the starter 34 and the second shaft 331, for example, a plurality of teeth are arranged on the side walls of the first shaft 321 and the second shaft 331, a rotating shaft of the starter 34 is directly engaged with the plurality of teeth on the side walls of the first shaft 321 and the second shaft 331, and then the first shaft 321 and the second shaft 331 are driven to rotate by the rotation of the rotating shaft of the starter 34. As another example, a mechanical arm capable of respectively rotating around the first shaft 321 or the second shaft 331 is respectively arranged on the side walls of the first shaft 321 and the second shaft 331, the two mechanical arms are respectively connected with the starter 34, the starter 34 drives the two mechanical arms to act respectively, and then the two mechanical arms correspondingly drive the first shaft 321 or the second shaft 331 connected therewith to rotate.

As another example, a first shaft gear 322 may be directly added in the first power source 32, a second shaft gear 332 is added in the second power source 33, and a starter gear 31 is added in the power device. The first shaft gear 322 is sleeved on the first shaft 321 to rotate synchronously with the first shaft 321, and the second shaft gear 332 is sleeved on the second shaft 331 to rotate synchronously with the second shaft 331. Meanwhile, the starter gear 31 is connected with the rotating shaft of the starter 34, the starter 34 drives the starter gear 31 to rotate, and the starter gear 31 is correspondingly engaged with the first shaft gear 322 and the second shaft gear 332 respectively to ensure that the first shaft gear 322 and the second shaft gear 332 can rotate synchronously in the rotating process of the starter gear 31. Certainly, the connection mode between the first shaft gear 322 and the first shaft 321 and the connection mode between the second shaft gear 332 and the second shaft 331 may be diverse, for example, the first shaft gear 322 and the first shaft 321 may be connected by welding, and the second shaft gear 332 and the second shaft 331 may be connected by welding. As another example, the first shaft gear 322 and the first shaft 321 may be integrated, and the second shaft gear 332 and the second shaft 331 may also be integrally connected. In the embodiment of the present invention, the connection modes are available as long as they can achieve the technical effects that the first shaft gear 322 rotates synchronously with the first shaft 321 and the second shaft gear 332 rotates synchronously with the second shaft 331. Similarly, in the presence of the two shaft gears (the first shaft gear 322 and the second shaft gear 332), there may be two starter gears 31 and even two starters 34. That is, the first shaft gear 322 is matched with one starter gear 31 and one starter 34, and the second shaft gear 332 is matched with the other starter gear 31 and the other starter 34, or the first shaft gear 322 is matched with one starter gear 31, the second shaft gear 332 is matched with the other starter gear 31, and one starter 34 simultaneously starts the two starter gears 31 to rotate, etc., and all situations finally enabling the first shaft 321 and the second shaft 331 to be driven to rotate are applicable to the present invention.

Altogether, as mentioned above, how the starter 34 starts the first shaft 321 and the second shaft 331 to rotate is not limited by the embodiment of the present invention, at least the three starting structures and modes described above may be adopted, certainly, other starting structures and modes not limited to the embodiment of the present invention may also be adopted, are applicable to the present invention as long as the starter can normally start the first shaft 321 and the second shaft 331 to rotate, and are thus not redundantly described herein. However, it is worth mentioning that the first shaft 321 and the second shaft 331 in the embodiment of the present invention are parallel and have opposite rotating directions.

Further, as for the power device 3, in order to simplify the design of the internal structure and reduce the industrial manufacturing cost, the first power source 32 may be a first single-cylinder engine, and the second power source 33 may be a second single-cylinder engine. The power device 3 may further include a connecting plate 35.

The first single-cylinder engine is provided with the first shaft 321, and the combustion material is injected in the cylinder of the first single-cylinder engine; the second single-cylinder engine is provided with the second shaft 331, and the combustion material is injected in the cylinder of the second single-cylinder engine; the first single-cylinder engine penetrates through the connecting plate 35 via the first shaft 321, and the second single-cylinder engine penetrates through the connecting plate 35 via the second shaft 331, so that the connecting plate 35 connects the first single-cylinder engine with the second single-cylinder engine into a whole.

Meanwhile, the power device 3 further includes a first carburetor 36 and a second carburetor 37, the first carburetor 36 is connected with the oil inlet of the first single-cylinder engine, and the second carburetor 37 is connected with the oil inlet of the second single-cylinder engine. In this case, the combustion material (e.g., liquid combustion material) in different states is converted into a gas combustion material under the action of the first carburetor 36 and/or the second carburetor 37, which is prepared for explosion and burning of the combustion material in the first single-cylinder engine and/or the second single-cylinder engine. It could be understood that the combustion material in the cylinder of the first single-cylinder engine is injected via the first carburetor 36, and the combustion material in the cylinder of the second single-cylinder engine is injected via the second carburetor 37.

It should be noted that the connecting plate 35 connects the first single-cylinder engine with the second single-cylinder engine into a whole to form a double-shaft aero-engine (the power device 3) in the embodiment of the present invention, wherein the connecting plate 35 may include a first hood 351 and a second hood 352. The first hood 351 and the second hood 352 are detachably connected with each other, an accommodating space 353 is formed between the first hood 351 and the second hood 352, and the first shaft gear 322, the second shaft gear 332 and the starter gear 31 are placed in the accommodating space 353. Moreover, the starter 34 penetrates through the first hood 351 or the second hood 352 to be connected with the starter gear 31.

It could be understood that the first shaft 321 of the first single-cylinder engine is sleeved with the first shaft gear 322, and the second single-cylinder engine is sleeved with the second shaft gear 332. The starter 34 starts the first shaft gear 322 and the second shaft gear 332 to rotate first via the starter gear 31, then the first shaft 321 and the second shaft 331 are driven to rotate (the rotating directions of the both are opposite), the started rotating first shaft 321 compresses the combustion material injected in the cylinder of the first single-cylinder engine, the combustion material is exploded and burnt, the thermal energy is converted into mechanical kinetic energy, the first shaft 321 is driven to rotate continuously under the impact of rapidly expanding air pressure, and then the first shaft 321 drives each rotor in the m/2 first rotor sets to rotate, thereby entering a normal cyclic driving program of the first single-cylinder engine, the first shaft 321 and the m/2 first rotor sets. The started rotating second shaft 331 compresses the combustion material injected in the second power source 33, the combustion material is exploded and burnt, the thermal energy is converted into mechanical kinetic energy, the second shaft 331 is driven to rotate continuously under the impact of rapidly expanding air pressure, and then the second shaft 331 drives each rotor in the m/2 second rotor sets to rotate, thereby entering a normal cyclic driving program of the second single-cylinder engine, the second shaft 331 and the m/2 second rotor sets. It is worth mentioning that the internal principles of the first single-cylinder engine and the second single-cylinder engine (e.g., the started rotating first shaft 321 compresses the combustion material injected in the cylinder of the first single-cylinder engine, the combustion material is exploded and burnt, the thermal energy is converted into mechanical kinetic energy, the first shaft 321 is driven to rotate continuously under the impact of rapidly expanding air pressure) are the working principles of engines in the prior art, and are thus not redundantly described herein. The present invention is innovative in how the first single-cylinder engine and the second single-cylinder engine form a double-cylinder opposite double-output-shaft engine via the connecting plate 35, the starter 34 and/or the starter gear 31 and in that the double-cylinder opposite double-output-shaft engine is applied to oil driven variable pitch multi-rotor flight equipment, so that the equipment is simple in structure, reliable and portable and simultaneously has the technical features of long duration and high loading capacity. Further, in order to cool the power device 3 provided by the embodiment of the present invention in time and avoid the influence of too high temperature on its normal use, the embodiment of the present invention preferably includes an air cooling system 38. The air cooling system 38 is fixed on the first power source 32 and the second power source 33, so that external cold air is sucked into the power device 3 via the air cooling system 38 and then flows through the first power source 32 and/or the second power source 33 to cool the first power source 32 and/or the second power source 33.

Specifically, continuously referring to Figs. 4-5, the air cooling system 38 may include a cover 381, a first centrifugal fan 382 and a second centrifugal fan 383. The first centrifugal fan 382 is movably connected with the first shaft 321, and the first shaft 321 drives the first centrifugal fan 382 to rotate; the second centrifugal fan 383 is movably connected with the second shaft 331, and the second shaft 331 drives the second centrifugal fan 383 to rotate. Besides, the first centrifugal fan 382, the second centrifugal fan 383, the first power source 32 and the second power source 33 are arranged in the cover 381, and the rotating first centrifugal fan 382 and/or the second centrifugal fan 383 drive the cold air to flow in the cover 381 to cool the first power source 32 and/or the second power source 33..

In the embodiment of the present invention, the first centrifugal fan 382 and the second centrifugal fan 383 are used for sucking in fluid in the axial directions thereof and then throwing out the fluid in the circumferential directions by using the centrifugal force thereof, it could be understood as throwing into the cover 381, and the first power source 32 and the second power source 33 are thus air-cooled. Normal operation of the first power source 32 and the second power source 33 is prevented from being influenced by too high temperature in the cover 381 due to long working time and continuous heat emission of the first power source 32 and the second power source 33, and the characteristic of high safety performance is achieved.

Certainly, in the embodiment of the present invention, there are two power sources, e.g., the first power source 32 and the second power source 33. There are also two centrifugal fans matched with the power sources, e.g., the first centrifugal fan 382 and the second centrifugal fan 383. There are also two shafts matched with the power sources, e.g., the first shaft 321 and the second shaft 331. However, the specific quantity of the power sources is not limited. In other words, designing three, four, five or more power sources according to actual operating requirements is also applicable to the present invention, as long as three, four, five or more centrifugal fans and shafts corresponding to the power sources are also designed. The remaining structures are adaptively modified, and these modifications fall into the protection scope of the present invention.

Preferably, the cover 381 in the embodiment of the present invention may include a first side wall 3811, a second side wall 3812 and an air inlet plate 3813. The air inlet plate 3813 is provided with a first air inlet 3813a and a second air inlet 3813b, the end of the first side wall 3811 and the end of the second side wall 3812 are respectively fixedly connected with the air inlet plate 3813 to form the cover 381 with a U-shaped structure, and the first side wall 3811 is parallel to the second side wall 3812. The first power source 32 and the second power source 33 are arranged in the U-shaped groove of the U-shaped structure, the rotating first centrifugal fan 382 drives the cold air to flow into the cover 381 via the first air inlet 3813a, and the rotating second centrifugal fan 383 drives the cold air to flow into the cover 381 via the second air inlet 3813b.

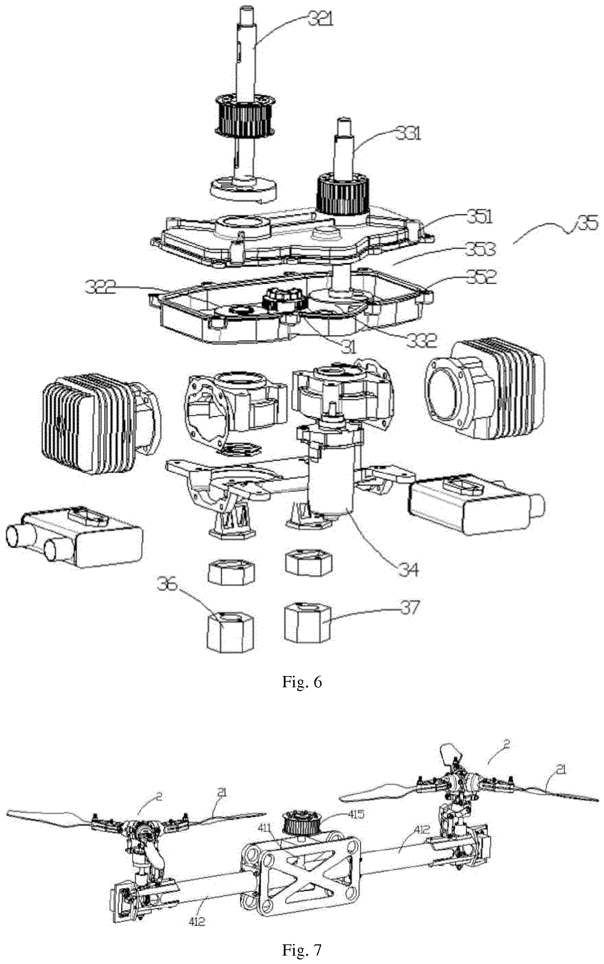

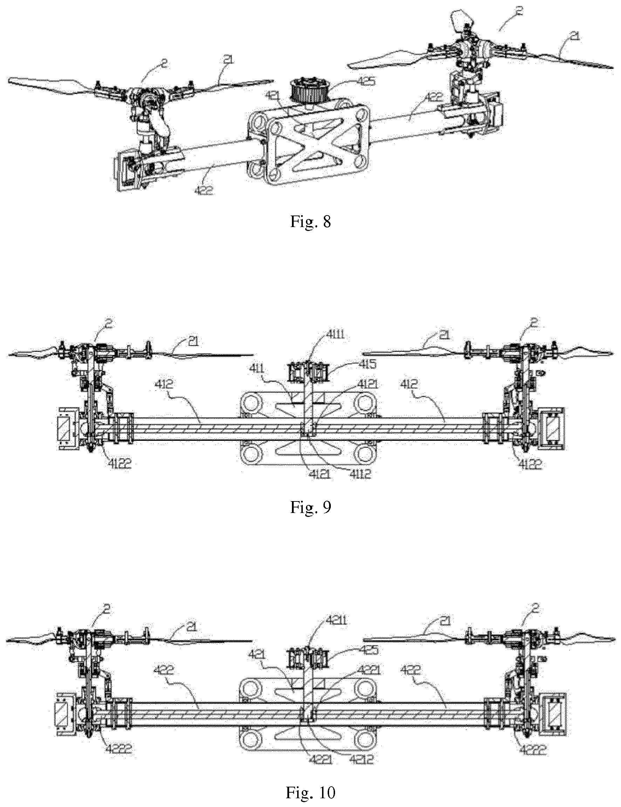

In the embodiment of the present invention, as for the mechanical transmission between the rotor sets 2 and the power device 3, a belt transmission device 4 is fixed on the frame 1, and correspondingly movably connects the power device 3 with each rotor set 2, so that the mechanical transmission can be realized between the power device 3 and each rotor set 2 via the belt transmission device 4. Specifically, in combination with Figs. 2-3 and referring to Figs. 7-10, the belt transmission device 4 may be specifically divided into a first belt transmission device 41 and a second belt transmission device 42.

The first belt transmission device 41 is fixed on the frame 1, and is correspondingly movably connected with the m/2 first rotor sets respectively. The second belt transmission device 42 is fixed on the frame 1, and is correspondingly movably connected with the m/2 second rotor sets respectively. One end of the first belt transmission device 41 is sleeved on the first shaft 321, the other end of the first belt transmission device 41 is sleeved on rotor shafts of the rotors in the m/2 first rotor sets, and the rotation of the first shaft 321 drives the first belt transmission device 41 to carry out transmission so as to drive each rotor in the m/2 first rotor sets to rotate. One end of the second belt transmission device 42 is sleeved on the second shaft 331, the other end of the second belt transmission device 42 is sleeved on the rotor shafts of the rotors in the m/2 second rotor sets, and the rotation of the second shaft 331 drives the second belt transmission device 42 to carry out transmission so as to drive each rotor in the m/2 second rotor sets to rotate.

More specifically, the first belt transmission device 41 at least may include a first transmission shaft 411, m/2 second transmission shafts 412, a first conveying belt 413, a first motor 414 and a second motor 415. The first transmission shaft 411 includes a first fixed end 4111 and a first bevel gear end 4112, and the first bevel gear end 4112 is of a bevel gear structure. Each second transmission shaft 412 includes a third bevel gear end 4121 and a fourth bevel gear end 4122, and both the third bevel gear end 4121 and the fourth bevel gear end 4122 are of a bevel gear structure. The first conveying belt 413 includes a first sleeved end 4131 and a second sleeved end 4132. The first motor 414 is fixed on the first shaft 321 and rotates synchronously with the first shaft, and the first conveying belt 413 is sleeved on the first motor 414 via the first sleeved end 4131. The second motor 415 is fixed at the first fixed end 4111 and rotates synchronously with the first transmission shaft 411, and the first conveying belt 413 is sleeved on the second motor 415 via the second sleeved end 4132.

Further, the m/2 first rotor sets correspond to the m/2 second transmission shafts 412 one by one, that is, one of the first rotor sets corresponds to one of the m/2 second transmission shafts 412. The m/2 first rotor sets are correspondingly engaged with the m/2 fourth bevel gear ends 4122 of the m/2 second transmission shafts 412 via the bevel gear structures respectively, the m/2 second transmission shafts 412 are distributed symmetrically by taking the first transmission shaft 411 as a central vertical shaft, the m/2 third bevel gear ends 4121 of the m/2 second transmission shafts 412 are engaged with the first bevel gear end 4112 of the first transmission shaft 411 to convert the vertical rotation of the first transmission shaft 411 to the transverse rotation of the second transmission shafts 412, and then each rotor 21 in the m/2 first rotor sets is driven to rotate by the transverse rotation of the second transmission shafts 412.

The first belt transmission device 41 and the second belt transmission device 42 in the embodiment of the present invention are symmetrically distributed on two sides of the power device 3, i.e., it could be understood that the first belt transmission device 41 is arranged on one side of the first shaft 321 and correspondingly carries out mechanical transmission with the first shaft 321, and the second belt transmission device 42 is arranged on one side of the second shaft 331 and correspondingly carries out mechanical transmission with the second shaft 331.

Similarly, the second belt transmission device 42 includes a third transmission shaft 421, m/2 fourth transmission shafts 422, a second conveying belt 423, a third motor 424 and a fourth motor 425. The third transmission shaft 421 includes a second fixed end 4211 and a fifth bevel gear end 4212, and the fifth bevel gear end 4212 is of a bevel gear structure. Each fourth transmission shaft 422 includes a sixth bevel gear end 4221 and a seventh bevel gear end 4222, and both the sixth bevel gear end 4221 and the seventh bevel gear end 4222 are of a bevel gear structure. The second conveying belt 423 includes a third sleeved end 4231 and a fourth sleeved end 4232. The third motor 424 is fixed on the second shaft 331 and rotates synchronously with the second shaft 331, and the second conveying belt 423 is sleeved on the third motor 424 via the third sleeved end 4231. The fourth motor 425 is fixed at the second fixed end 4211 and rotates synchronously with the third transmission shaft 421, and the second conveying belt 423 is sleeved on the fourth motor 425 via the fourth sleeved end 4232.

Similarly, the m/2 second rotor sets correspond to the m/2 fourth transmission shafts 422 one by one, that is, one of the m/2 second rotor sets corresponds to one of the m/2 fourth transmission shafts 422. The m/2 second rotor sets are correspondingly engaged with the m/2 seventh bevel gear ends 4222 of the m/2 fourth transmission shafts 422 via the bevel gear structures respectively, the m/2 fourth transmission shafts 422 are distributed symmetrically by taking the third transmission shaft 421 as a central vertical shaft, the m/2 sixth bevel gear ends 4221 of the m/2 fourth transmission shafts 422 are engaged with the m/2 fifth bevel gear ends 4212 of the third transmission shaft 421 to convert the vertical rotation of the third transmission shaft 421 to the transverse rotation of the fourth transmission shafts 422, and then each rotor 21 in the m/2 second rotor sets is driven to rotate by the transverse rotation of the fourth transmission shafts 422.

In the embodiment of the present invention, the quantity of rotors in each rotor set 2 may be n, and the n is an integer more than or equal to 2.

Certainly, in the embodiment of the present invention, in order to better describe the mechanical transmission between the rotor sets 2 and the first belt transmission device 41 and between the rotor sets 2 and the second belt transmission device 42 in detail, m=3 and n=4 are taken as an example for further elaboration. Certainly, those skilled in the art could obviously understand that m=4 is merely a way to assume value, n=3 is also merely a way to assume value, and when the m is equal to an even number such as 6, 8, 10 or the like and the n is equal to an integer value such as 2, 4, 5, 6 or the like, they are also applicable to the present invention.

For example, when m=4 and n=3, there are totally four rotor sets 2 including two first rotor sets and two second rotor sets, and each rotor set 2 includes three rotors 21. At the moment, the two rotor sets (first sets) in the four rotor sets are distributed on one side of the first transmission shaft 411, and the other two rotor sets (second sets) in the four rotor sets are distributed on one side of the second transmission shafts 412. Meanwhile, the first belt transmission device 41 includes two second transmission shafts 412. Each second transmission shaft 412 includes a third bevel gear end 4121 and a fourth bevel gear end 4122, and both the third bevel gear end 4121 and the fourth bevel gear end 4122 are of a bevel gear structure. Thus, the two first rotor sets correspond to the two second transmission shafts 412, that is, one of the first rotor sets corresponds to one of the two second transmission shafts 412. The two first rotor sets are correspondingly engaged with the two fourth bevel gear ends 4122 of the two second transmission shafts 412 via the bevel gear structures respectively; and the two second transmission shafts 412 are distributed symmetrically by taking the first transmission shaft 411 as a central vertical shaft, the two third bevel gear ends 4121 of the two second transmission shafts 412 are engaged with the first bevel gear end 4112 of the first transmission shaft 411 to convert the vertical rotation of the first transmission shaft 411 to the transverse rotation of the second transmission shafts 412, and then the three rotors 21 in each of the two first rotor sets 2 are driven to rotate by the transverse rotation of the second transmission shafts 412.

Similarly, the second belt transmission device 42 also includes two fourth transmission shafts 422, wherein each of the two fourth transmission shafts 422 includes a sixth bevel gear end 4221 and a seventh bevel gear end 4222, and both the sixth bevel gear end 4221 and the seventh bevel gear end 4222 are of a bevel gear structure. Thus, the two second rotor sets correspond to the two fourth transmission shafts 422 one by one, that is, one of the two second rotor sets corresponds to one of the two fourth transmission shafts 422. The two second rotor sets are correspondingly engaged with the two seventh bevel gear ends 4222 of the two fourth transmission shafts 422 via the bevel gear structures respectively; and the two fourth transmission shafts 422 are distributed symmetrically by taking the third transmission shaft 421 as a central vertical shaft, the two sixth bevel gear ends 4221 of the two fourth transmission shafts 422 are engaged with the two fifth bevel gear ends 4212 of the third transmission shaft 421 to convert the vertical rotation of the third transmission shaft 421 to the transverse rotation of the fourth transmission shafts 422, and then the three rotors 21 in each of the two second rotor sets 2 are driven to rotate by the transverse rotation of the fourth transmission shafts 422.

It is worth mentioning that in the embodiment of the present invention, the first rotor sets 2 are as many as the second transmission shafts 412, and the second rotor sets 2 are as many as the fourth transmission shafts 422, but the quantity of the first rotor sets 2 and the quantity of the second rotor sets 2 may be different. In other words, whether the quantity of the first rotor sets 2 and the quantity of the second rotor sets 2 are same is not limited by the embodiment of the present invention, and they are available as long as the first rotor sets 2 are as many as the second transmission shafts 412 and the second rotor sets 2 are as many as the fourth transmission shafts 422. Similarly, the first transmission shaft 411 is as many as the first shaft 321, and the third transmission shaft 421 is as many as the second shaft 331. However, the quantity of the first shaft 321 and the quantity of the second shaft 331 may be different, and their specific quantities are not limited in the present invention. In other words, according to the actual operating requirements, it is applicable to the present invention to design two, three, four or more first shafts 321, two, three, four or more second shafts 331, three, four or more first rotor sets 2 and three, four or more second rotor sets 2, and as long as the corresponding quantity relations correspond to the above descriptions, these designs fall into the protection scope of the present invention.

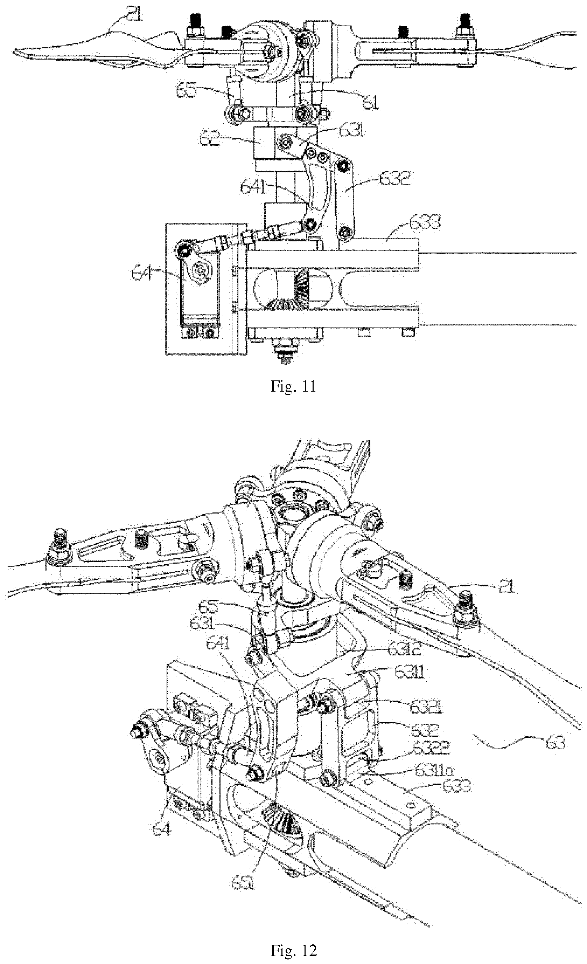

In the embodiment of the present invention, with regard to the transmission between the rotor sets 2 and the second transmission shafts 412 or the fourth transmission shafts 422, variable pitch devices 6 may be adopted for connecting, as shown in Fig. 3. It should be noted that the transmission between each rotor set 2 and each second transmission shaft 412 or fourth transmission shaft 422 is realized by one variable pitch device 6, so for simplifying the description, only one variable pitch device 6 is elaborated in the embodiment of the present invention. For the transmission between the remaining rotor sets 2 and the corresponding second transmission shafts 412 or fourth transmission shafts 422, reference may be directly made to the variable pitch device 6. Continuously referring to Figs. 11-12, the variable pitch device 6 at least includes a main shaft 61, an up-down slider 62, an anti-lock mechanism 63, an actuator 64 and a force transfer arm 65. The n rotors 21 are rotatably fixed on the main shaft 61, the up-down slider 62 is sleeved on the main shaft 61, the actuator 64 is movably connected with the anti-lock mechanism 63, the anti-lock mechanism 63 is movably connected with the up-down slider 62, and the actuator 64 drives the up-down slider 62 to slide up and down. The force transfer arm 65 is connected with the up-down slider 62 and the rotors 21 respectively, so that the up-down slider 62 drives the rotors 21 to rotate in the up-down sliding process to change the pitches of the rotors 21. The anti-lock mechanism 63 includes a first rocker arm 631, a second rocker arm 632 and a positioning block 633.

Specifically, the up-down slider 62 is of a hollow structure (cylindrical hollow structure), and is sleeved on the outer wall of the main shaft 61 via the hollow structure; one end of the first rocker arm 631 is movably connected with the up-down slider 62; the other end of the first rocker arm 631 is movably connected with one end of the second rocker arm 632; the other end of the second rocker arm 632 is movably connected with the positioning block 633; and the positioning block 633 is fixed at the end of the second transmission shaft or the fourth transmission shaft. In practical operation, one end of the first rocker arm 631 is movably connected with the up-down slider 62, so that the first rocker arm 631 can rotate by taking the connection part of the first rocker arm 631 and the up-down slider 62 as a center point; the other end of the first rocker arm 631 is movably connected with one end of the second rocker arm 632, so that the first rocker arm 631 and the second rocker arm 632 can rotate by taking respective connection parts as center points; the other end of the second rocker arm 632 is movably connected with the positioning block 633, so that the second rocker arm 632 can rotate by taking the connection part of the second rocker arm 632 and the positioning block 633 as a center point; the top of an actuator connecting arm 641 is movably connected with the side of the first rocker arm 631; the bottom of the actuator connecting arm 641 is connected with the actuator 64; that is, the actuator 64 can transfer actuator thrust to the first rocker arm 631 via the actuator connecting arm 641, and then drives the first rocker arm 631 to swing.

In the embodiment of the present invention, in order to facilitate movable connection among the first rocker arm 631, the second rocker arm 632 and the up-down slider 62 and realize relative rotation between every two, a first U-shaped part 6312 is preferably formed at one end of the first rocker arm 631; the first rocker arm 631 is sleeved outside the up-down slider 62 via the U-shaped notch of the first U-shaped part 6312, and movably connected with the up-down slider 62 via the first U-shaped part 6312; a first raised part 6311 is formed at the other end of the first rocker arm 631; a first connecting hole is formed in the end of the first raised part 6311; the first raised part 6311 is movably connected with one end of the second rocker arm 632 via the first connecting hole; a second U-shaped part 6321 adapting to the first raised part 6311 in shape is formed at one end of the second rocker arm 632; the first raised part 6311 is placed inside the U-shaped notch of the second U-shaped part 6321 and movably connected with one end of the second rocker arm 632 via the second U-shaped part 6321. A third U-shaped part 6322 is formed at the other end of the second rocker arm 632; a second raised part 6311 a adapting to the U-shaped notch of the third U-shaped part in structure is formed at one end of the positioning block 633; a second connecting hole is formed in the end of the second raised part 6311 a; and the second raised part 6311 a is placed inside the U-shaped notch of the third U-shaped part 6322 and movably connected with the third U-shaped part 6322 at the other end of the second rocker arm via the second connecting hole. The actuator connecting arm 641 is of a crescent structure; at least one third connecting hole is formed in the top of the actuator connecting arm 641; the top of the actuator connecting arm 641 is movably connected with the side wall of the first rocker arm 631 via the third connecting hole; a fourth U-shaped part 651 is formed at the bottom of the actuator connecting arm 641; and the bottom of the actuator connecting arm 641 is connected with the actuator 64 via the fourth U-shaped part 651.

In the embodiment of the present invention, the wing profile attack angles of the rotors 21 are changed via the variable pitch devices 6, so that the wing profile lift force is changed to adjust the output power, the rotating speed of the rotors is maintained unchangeable, and vertical motion, roll motion and steering motion are realized by changing the pitches of the rotors 21. Meanwhile, the folding mechanical motion mode among the up-down slider 62, the first rocker arm 631 and the actuator connecting arm 641 and the folding mechanical motion mode among the up-down slider 62, the first rocker arm 631 and the second rocker arm 632 overcome the situation that the rotors 21 are locked because the main shaft 61 cannot completely fall in the ascending and descending process in the presence of a too long actuator connecting arm 641 due to the limitation of the mechanical structure (straight bar shape) of an actuator connecting rod on positional space in the prior art, and simultaneously overcome the defect that the main shaft cannot ascend to an operating point in the ascending process in the presence of a too short actuator connecting arm 641.

Obviously, various alterations and modifications can be made to the present invention by those skilled in the art without departing from the spirit and scope of the present invention. In case that these alterations and modifications of the present invention fall into the scope of the claims of the present invention and equivalent technologies thereof, the present invention is also intended to include these alterations and modifications.

## Claims

1. Multi-shaft power source unmanned flight equipment, comprising:
a frame (1);
a plurality of rotor sets (2), wherein each rotor set (2) comprises a plurality of rotors (21), and each rotor set (2) is rotatably fixed on the frame (1), so that the rotors (21) in each rotor set (2) can rotate relative to the frame (1); and
a power device (3), fixed on the frame (1) and correspondingly movably connected with the rotor sets (2) respectively, so that mechanical transmission can be realized between the power device (3) and each rotor set (2);
wherein the rotors (21) in each rotor set (2) correspondingly connected with the power device (3) are driven to rotate via mechanical kinetic energy generated by burning a combustion material injected in the power device (3).

2. The multi-shaft power source unmanned flight equipment of claim 1, further comprising:
a belt transmission device (4), which is fixed on the frame (1) and correspondingly movably connects the power device (3) with each rotor swing set (2), thereby realizing mechanical transmission between the power device (3) and each rotor set (2) via the belt transmission device (4).

3. The multi-shaft power source unmanned flight equipment of claim 1,
wherein the quantity of the rotor sets (2) is m, and the m is an even number more than or equal to 2; and
wherein the m rotor sets comprise m/2 first rotor sets and m/2 second rotor sets, the m/2 first rotor sets are respectively movably connected with the power device (3), the m/2 second rotor sets are respectively movably connected with the power device (3), and the mechanical transmission between the m/2 first rotor sets and the power device (3) is independent from that between the m/2 second rotor sets and the power device (3).

4. The multi-shaft power source unmanned flight equipment of claim 3, wherein the power device (3) comprises:
a first power source (32), wherein the first power source (32) is provided with a first shaft (321), and the m/2 first rotor sets are respectively movably connected with the first shaft (321);
a second power source (33), wherein the second power source (33) is provided with a second shaft (331), and the m/2 second rotor sets are respectively movably connected with the second shaft (331); and
a starter (34), wherein the starter (34) is movably connected with the first shaft (321) and the second shaft (331) respectively, and is used to start the first shaft (321) and the second shaft (331) to rotate;
wherein the started rotating first shaft (321) compresses the combustion material injected in the first power source (32) to generate mechanical kinetic energy, the mechanical kinetic energy drives the first shaft (321) to rotate continuously, and then the first shaft (321) drives each rotor in the m/2 first rotor sets to rotate; and the started rotating second shaft (331) compresses the combustion material injected in the second power source (33) to generate mechanical kinetic energy, the mechanical kinetic energy drives the second shaft (331) to rotate continuously, and then the second shaft (331) drives each rotor in the m/2 second rotor sets to rotate.

5. The multi-shaft power source unmanned flight equipment of claim 4, wherein:
the first power source (32) further comprises a first shaft gear (322);
the second power source (33) further comprises a second shaft gear (332); and
the power device (3) further comprises a starter gear (31);
wherein the first shaft gear (322) is sleeved on the first shaft (321) and rotates synchronously with the first shaft (321), and the second shaft gear (332) is sleeved on the second shaft (331) and rotates synchronously with the second shaft (331);
and the starter gear (31) is connected with the starter (34), the starter (34) drives the starter gear (31) to rotate, and the starter gear (31) is correspondingly engaged with the first shaft gear (322) and the second shaft gear (332) respectively.

6. The multi-shaft power source unmanned flight equipment of claim 4 or 5, wherein the first shaft (321) and the second shaft (331) are parallel, and have opposite rotating directions.

7. The multi-shaft power source unmanned flight equipment of claim 4, further comprising:
a first belt transmission device (41), fixed on the frame (1) and correspondingly movably connected with the m/2 first rotor sets respectively; and
a second belt transmission device (42), fixed on the frame (1) and correspondingly movably connected with the m/2 second rotor sets respectively;
wherein the first belt transmission device (41) is sleeved on the first shaft (321), and the rotation of the first shaft (321) drives the first belt transmission device (41) to carry out transmission so as to drive each rotor in the m/2 first rotor sets to rotate; and the second belt transmission device (42) is sleeved on the second shaft (331), and the rotation of the second shaft (331) drives the second belt transmission device (42) to carry out transmission so as to drive each rotor in the m/2 second rotor sets to rotate.

8. The multi-shaft power source unmanned flight equipment of claim 7, wherein the first belt transmission device (41) comprises:
a first transmission shaft (411), comprising a first fixed end (4111) and a first bevel gear end (4112) of a bevel gear structure;
m/2 second transmission shafts (412), wherein each second transmission shaft (412) comprises a third bevel gear end (4121) and a fourth bevel gear end (4122), and both the third bevel gear end (4121) and the fourth bevel gear end (4122) are of a bevel gear structure;
a first conveying belt (413), comprising a first sleeved end (4131) and a second sleeved end (4132);
a first motor (414), wherein the first motor (414) is fixed on the first shaft (321) and rotates synchronously with the first shaft (321), and the first conveying belt (413) is sleeved on the first motor (414) via the first sleeved end (4131); and
a second motor (415), wherein the second motor (415) is fixed at the first fixed end (4111) and rotates synchronously with the first transmission shaft (411), and the first conveying belt (413) is sleeved on the second motor (415) via the second sleeved end (4132);
wherein the m/2 first rotor sets correspond to the m/2 second transmission shafts (412) one by one, and are correspondingly engaged with the m/2 fourth bevel gear ends (4122) of the m/2 second transmission shafts (412) via the bevel gear structures respectively; and the m/2 second transmission shafts (412) are distributed symmetrically by taking the first transmission shaft (411) as a central vertical shaft, the m/2 third bevel gear ends (4121) of the m/2 second transmission shafts (412) are engaged with the first bevel gear end (4112) to convert the vertical rotation of the first transmission shaft (411) to the transverse rotation of the second transmission shafts (412), and then each rotor (21) in the m/2 first rotor sets is driven to rotate by the transverse rotation of the second transmission shafts (412);
and/or
the second belt transmission device (42) comprises:
a third transmission shaft (421), comprising a second fixed end (4211) and a fifth bevel gear end (4212) of a bevel gear structure;
m/2 fourth transmission shafts (422), wherein each fourth transmission shaft (422) comprises a sixth bevel gear end (4221) and a seventh bevel gear end (4222), and both the sixth bevel gear end (4221) and the seventh bevel gear end (4222) are of a bevel gear structure;
a second conveying belt (423), comprising a third sleeved end (4231) and a fourth sleeved end (4232);
a third motor (424), wherein the third motor (424) is fixed on the second shaft (331) and rotates synchronously with the second shaft (331), and the second conveying belt (423) is sleeved on the third motor (424) via the third sleeved end (4231); and
a fourth motor(425), wherein the fourth motor (425) is fixed at the second fixed end (4211) and rotates synchronously with the third transmission shaft (421), and the second conveying belt (423) is sleeved on the fourth motor (425) via the fourth sleeved end (4232);
wherein the m/2 second rotor sets correspond to the m/2 fourth transmission shafts (422) one by one, and are correspondingly engaged with the m/2 seventh bevel gear ends (4222) of the m/2 fourth transmission shafts (422) via the bevel gear structures respectively; and the m/2 fourth transmission shafts (422) are distributed symmetrically by taking the third transmission shaft (421) as a central vertical shaft, the m/2 sixth bevel gear ends (4221) of the m/2 fourth transmission shafts (422) are engaged with the fifth bevel gear end (4212) to convert the vertical rotation of the third transmission shaft (421) to the transverse rotation of the fourth transmission shafts (422), and then each rotor (21) in the m/2 second rotor sets is driven to rotate by the transverse rotation of the fourth transmission shafts (422).

9. The multi-shaft power source unmanned flight equipment of claim 1, wherein the quantity of rotors in each rotor set (2) is n, and the n is an integer more than or equal to 2.

10. The multi-shaft power source unmanned flight equipment of claim 3 or 4 or 5 or 7 or 8, wherein the m is 4.
